# EUROPÄISCHE PATENTSCHRIFT

(11) **EP 2 333 386 B1**
(45) Veröffentlichungstag und Bekanntmachung des Hinweises auf die Patenterteilung: **19.06.2013**
(21) Anmeldenummer: 10192921.4
(22) Anmeldetag: 29.11.2010
(51) Int. Cl.: F16K 7/12, F16K 27/02

(54) **Ventilkörper mit Inliner und Verfahren zur Herstellung eines Ventilkörpers mit Inliner**
Valve body with inliner and method for producing same
Corps de soupape doté d'une garniture intérieure et procédé de fabrication d'un corps de soupape doté d'une garniture intérieure

(30) Priorität: 08.12.2009 DE 102009047669
(43) Veröffentlichungstag der Anmeldung: 15.06.2011
(73) Patentinhaber: GEMÜ Gebrüder Müller Apparatebau GmbH & Co. KG, 74653 Ingelfingen (DE)
(72) Erfinder: Haidt, Harald, 74613 Öhringen (DE); Müller, Fritz, 74653 Ingelfingen (DE)
(74) Vertreter: Dreiss

(56) Entgegenhaltungen:
- EP-A1- 2 014 439
- US-A- 4 113 826
- US-A- 5 520 213

## Beschreibung

Die Erfindung betrifft ein Verfahren zur Herstellung eines Ventilkörpers mit Inliner mit den Merkmalen nach dem Oberbegriff des Anspruchs 1.

Derartige Ventilkörper sind in ihrem Inneren zwischen einem ersten Flansch und einem zweiten Flansch mit einer Durchgangsleitung versehen und davon abzweigend mit einer Einrichtung zur Montage oder Aufnahme von einem Dosier- oder Absperrventil ausgestattet. Die bekannten derartigen Ventilkörper werden mit einem Einsatz bzw. Inliner in ihrem Inneren ausgestattet, um sie beispielsweise widerstandsfähig gegen bestimmte aggressive Medien zu machen. Die Inliner werden im Stand der Technik auch verwendet, um einen Austausch nach einer Abnutzung des Inliners zu ermöglichen, ohne dass der vollständige Ventilkörper ausgetauscht werden muss. Bisher bekannte derartige Ventilkörper weisen in der Regel Einsätze oder Inliner auf, die als separates Bauteil beispielsweise aus einem flexiblen Material hergestellt werden und anschließend ins Innere des beispielsweise aus einem harten Kunststoff oder Metall bestehenden Ventilkörpers eingesetzt werden. Daneben gibt es im Stand der Technik auch Herstellungsverfahren, bei denen zuerst der Inliner oder Einsatz hergestellt wird und anschließend der Ventilkörper beispielsweise aus einem anderen Kunststoffmaterial um den Inliner herum in einer Form eingespritzt wird. Des Weiteren gibt es im Stand der Technik Herstellungsverfahren, bei denen zuerst ein Ventilkörper hergestellt wird und anschließend unter Verwendung von sogenannten Kernen, die in den Ventilkörper eingesetzt werden, der Einsatz oder Inliner ins Innere zwischen den Kern und den Ventilkörper eingespritzt wird.

Bei der Herstellung derartiger Ventilkörper mit Inlinern unter Verwendung von Kernen, welche ins Innere des Ventilkörpers eingesetzt werden, besteht ein Problem dahingehend, dass mehrteilige Kerne verwendet werden müssen. An den Übergangsstellen zwischen der Durchgangsleitung und der Aufnahmevorrichtung für das eigentliche Ventil entstehen dabei regelmäßig scharfe Kanten, welche ungünstig für das Strömungsverhalten von durchströmendem Fluid sind. Außerdem ist mit derartigen mehrteiligen Kernen, die im Inneren des Ventilkörpers zum Einspritzen eines Inliners verwendet werden, das Herstellen von Hinterschnitten kaum zu realisieren. Daher ist man hier in der Innenform der Inliner relativ beschränkt, und deshalb sind derartige bekannte Inliner im Inneren meist relativ strömungsungünstig ausgestaltet.

Aus US 4,113,826 ist ein Strömungsventil für Fluide bekannt, welches mit einem durch Spritzgießen im Inneren hergestellten Inliner versehen wird. Um unerwünschte Gießgrate und Angießtrichter im Strömungsbereich der Durchgangsleitung des Ventils zu vermeiden, wird der Spritzansatz in eine Erweiterung des Inliners verlegt, die sich außerhalb von dem inneren Bereich des Inliners befindet. Bei einem anderen bekannten Ventilkörper mit Inliner, wie er in EP 2 014 439 A1 offenbart ist, wird ein Innenkörper in Form eines Rohlings vorgefertigt und in dem Ventilkörper erwärmt und in den Innenkonturbereich des Ventilkörpers gepresst. Auf diese Weise können die Hinterschneidungen mit dem Inliner ausgebildet werden. Anschließend wird der äußere Kunststoffkörper des Ventilkörpers um den so hergestellten Innenkörper herum durch Spritzgießen hergestellt. Eine gezielte Veränderung der Innenform mit Hilfe des Innenkörpers ist auf diese Weise nicht möglich. Auch sind mehrere Schritte für die Herstellung eines solchen Innenkörpers erforderlich.

Demgegenüber liegt der vorliegenden Erfindung die Aufgabe zugrunde, ein Verfahren zur Herstellung eines Ventilkörpers mit Inliner vorzuschlagen, welcher strömungstechnisch verbessert ist und einen größeren Formenspielraum für die Realisierung des Inneren der Durchgangsleitung erlaubt.

Diese Aufgabe wird mit einem Verfahren mit den Schritten nach Anspruch 1 gelöst. Vorteilhafte Ausgestaltungen und Weiterbildungen der Erfindung sind Gegenstand der abhängigen Ansprüche.

Das erfindungsgemäße Verfahren zur Herstellung von Ventilkörpern mit Inlinern ist gekennzeichnet durch die Schritte:
a. Zusammensetzen eines Kerns zum Spritzgießen des Inliners in einer Form aus mindestens zwei Kernsegmenten;
b. Herstellen des Inliners mit Hinterschneidungen und einer im Innern strömungsoptimierten Form durch Umspritzen des Kerns;
c. Segmentweises Entnehmen des Kerns aus dem so hergestellten Inliner;
d. Einsetzen eines Kerns in den Inliner, welcher die Bereiche von Hinterschneidungen nicht abstützt; und
e. Umspritzen des Inliners mit dem Ventilkörper unter mindestens teilweiser Auslassung von den Bereichen der Hinterschneidungen, derart, dass der Inliner an den Bereichen von Hinterschneidungen am Übergang zwischen der Durchgangsleitung und der Aufnahmeeinrichtung mindestens teilweise bis an eine Außenseite von dem Ventilkörper gezogen ist und/oder dort eine größere Wandstärke aufweist.

Durch Verwenden eines Kerns zum Spritzgießen des Inliners, der aus mindestens zwei Kernsegmenten besteht, kann an den Bereichen von Hinterschneidungen eine strömungsoptimierte Form des Inneren des Inliners hergestellt werden. Die Segmente des Kerns werden anschließend nach dem Spritzen des Inliners segmentweise herausgenommen, und ein Kern wird erfindungsgemäß eingesetzt, welcher die Bereiche der Hinterschneidungen nicht abstützt. Dies ist erfindungsgemäß möglich, da die Bereiche der Hinterschneidungen bis an die Außenseite des Ventilkörpers, der anschließend zu umspritzen ist, gezogen sind und/oder diese Bereiche mit erhöhten Wanddicken realisiert sind. Die erhöhten Wanddicken und/oder das Herausziehen bis an die Außenseite des Materials des Inliners an diesen Bereichen erlauben es, dass bisherige scharfe Kanten vermieden werden und insbesondere Abrundungen zur Strömungsoptimierung für ein durchströmendes Fluid erzielt werden können. Nach einem vorteilhaften Aspekt des erfindungsgemäßen Verfahrens wird die Innenform des Inliners so realisiert, dass bereichweise Aufweitungen des Strömungsquerschnitts an den Übergängen zwischen der Durchgangsleitung und der Aufnahmeeinrichtung hergestellt werden. Durch diese Maßnahme können ein höherer Durchsatz und eine gleichmäßigere Strömungsgeschwindigkeit in derartigen Ventilkörpern erreicht werden.

Hierdurch wird ein Ventilkörper für durchströmende Fluide mit einer Durchgangsleitung zwischen einem ersten Flansch und einem gegenüberliegenden zweiten Flansch sowie mit einer Einrichtung zur Aufnahme eines Absperr- oder Dosierventils hergestellt, wobei im Ventilkörper ein das Fluid führender Inliner vorgesehen ist, welcher das Innere des Ventilkörpers auskleidet, und wobei der Inliner des Ventilkörpers im Inneren strömungsoptimiert geformt ist, der Inliner an Bereichen von Hinterschneidungen am Übergang zwischen der Durchgangsleitung und der Aufnahmeeinrichtung für das Absperr- oder Dosierventil mindestens teilweise bis an eine Außenseite von dem Ventilkörper gezogen ist und/oder dort, d.h. in diesen Bereichen, eine größere Wandstärke gegenüber dem Rest des Inliners aufweist.

Dadurch, dass der Inliner des erfindungsgemäß hergestellten Ventilkörpers im Inneren hinsichtlich der Strömungseigenschaften optimiert geformt ist, wird ein insgesamt besseres Strömungsverhalten des Ventilkörpers im Betrieb bei durchströmenden Fluiden erreicht. Eine strömungsoptimierte Gestaltung der Innenform des Inliners kann dabei beispielsweise durch Vermeidung von scharfen Kanten und abrupten Querschnittsänderungen erfolgen. Die strömungsoptimierte Innenform der erfindungsgemäßen Inliner kann auch durch eine gezielte Verengung und Erweiterung an bestimmten Stellen derart erreicht werden, dass Turbulenzen im Inneren und insbesondere Turbulenzen am Übergang zwischen der Durchgangsleitung und der Aufnahmeeinrichtung für das eigentliche Ventil vermieden werden.

Durch die Maßnahme, dass der Inliner mindestens abschnittsweise an Bereichen von Hinterschneidungen am Übergang zwischen der Durchgangsleitung und der Aufnahmeeinrichtung mindestens teilweise bis an die Außenseite des Ventilkörpers gezogen ist und/oder in diesen Bereichen eine größere Wandstärke aufweist, wird erreicht, dass der Inliner in diesen Bereichen eine erhöhte Steifigkeit aufweist. Durch die erhöhte Eigensteifigkeit in diesen Bereichen kann der Gesamtkörper mit relativ einfachen Kernen oder Kernsegmenten realisiert werden, ohne dass aufwendige Einfallkerne oder komplizierte Entformungsvorgänge notwendig sind, und zwar trotz der hiermit realisierbaren Hinterschneidungen. Die lokal erhöhte Dicke der Wand oder das Vorstehen des Inliners bis an die Außenseite ist dabei in den Bereichen der hierfür kritischen Hinterschneidungen derart realisiert, dass eine innere Abstützung dieser Bereiche zur Vermeidung eines Einfallens nicht mehr erforderlich ist. Das Äußere des Ventilkörpers kann daher auf einem zuerst hergestellten Inliner durch einfaches Umspritzen mit Kunststoff hergestellt werden, und zwar dies auch mit einem relativ hohen Druck von beispielsweise einigen hundert bar.

Dabei ist der Inliner im Inneren mit abgerundeten, strömungsoptimierten Kanten gebildet. Durch die verdickten Wandstärken im Bereich von Hinterschneidungen am Übergang zwischen der Durchgangsleitung und der Aufnahmeeinrichtung ist hier ausreichend Material vom Inliner vorhanden, um auch an diesen kritischen Stellen abgerundete Kanten vorzusehen. Durch die abgerundeten Kanten werden insgesamt Turbulenzen in dem durchströmenden Medium verhindert, so dass die Strömungseigenschaften gegenüber bisherigen derartigen Ventilkörpern deutlich verbessert sind.

Der Inliner ist an den Übergangsbereichen zwischen der Durchgangsleitung und der Aufnahmeeinrichtung mit Aufweitungen des effektiven Strömungsquerschnitts ausgebildet. Durch eine partielle Aufweitung des Strömungsquerschnitts zwischen den Bereichen der Flansche der Durchgangsleitung und den Übergangsbereichen zu einer Aufnahmeeinrichtung wird erreicht, dass in diesem für die Strömung kritischen Bereich mit Umlenkungen und Vorsprüngen trotzdem eine gleichmäßigere Strömungsgeschwindigkeit realisiert werden kann. Die gleichmäßigere Strömungsgeschwindigkeit führt insgesamt zu einem deutlich höheren Maximaldurchsatz des erfindungsgemäßen Ventilkörpers mit strömungsoptimiertem Inliner gegenüber den Ventilkörpern aus dem Stand der Technik. Eine Aufweitung oder Querschnittsharmonisierung gemäß diesem Aspekt der Erfindung kann vorteilhafterweise unter einem Vergrößern des Querschnitts im Bereich von Hinterschneidungen erfolgen, in welchen größere Wandstärken vorhanden sind, so dass hier die Querschnittsvergrößerung leicht durch gezieltes Formen des Inliners realisierbar ist. In Kombination mit dem weiteren erfindungsgemäßen Merkmal einer strömungsoptimierten Ausgestaltung und Formung des Inneren des Inliners kann so ein deutlich verbesserter Ventilkörper für spezielle Anwendungsfälle erzielt werden, in welchen es auf einen hohen Durchsatz und eine gleichmäßigere Strömung ankommt.

Der Inliner des Ventilkörpers erstreckt sich an den Flanschen bis an die Außenseite. Der Inliner ist also nicht nur im Inneren der Durchgangsleitung vorgesehen, sondern nach dieser vorteilhaften Ausgestaltung an die Außenseite der Flansche herausgezogen. Im montierten Zustand wird der Inliner dadurch sicher in seiner Einbaulage und Position gehalten. Außerdem wird hierdurch verhindert, dass der Inliner an den Anschlusskanten der Durchgangsleitung frühzeitig beschädigt wird, beispielsweise bei abrasiven Medien, die in dem Ventilkörper zu befördern sind.

Der Inliner des Ventilkörpers ist an der Einrichtung zur Aufnahme eines Absperr- oder Dosierventils bis nach außen von dem Ventilkörper geführt. Der Inliner erstreckt sich also über beispielsweise einen Anschlussflansch der Einrichtung hinweg, so dass auch hiermit ein sicherer Halt des Inliners im Inneren des Ventilkörpers an seiner Bestimmungsstelle gewährleistet wird.

Das Umspritzen des Inliners wird mit dem Ventilkörper bei einem hohen Druck, insbesondere bei einem Druck von mehreren hundert bar, durchgeführt. Der hohe Druck erlaubt es, mit beispielsweise einer Spritzgießvorrichtung mit Kunststoffmaterial auch komplexere Formen zu realisieren. Der hohe Druck hat ferner den Vorteil, dass auch härtere Materialien hierdurch gut verarbeitbar sind.

Das Material des Inliners des erfindungsgemäß hergestellten Ventilkörpers kann beispielsweise ein unverstärktes Polypropylen sein. Das Material des Ventilkörpers kann nach einem vorteilhaften Aspekt der Erfindung ein verstärktes Polypropylen sein. Das Polypropylen für den Ventilkörper kann entweder ein faserverstärktes Polypropylen sein, beispielsweise verstärkt mit Glasfasern, oder ein mit Glaskugeln verstärktes Polypropylen. Andere Materialien für den Ventilkörper und den Inliner, insbesondere Materialien wie, PP, PFA, PTFE für den Inliner oder verstärkte Kunststoffe für den Ventilkörper, können ebenso im Rahmen der Erfindung eingesetzt werden.

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:
- Fig. 1: eine Seitenansicht eines Ausführungsbeispiels eines erfindungsgemäßen Ventilkörpers;
- Fig. 2: eine Draufsicht auf das Ausführungsbeispiel eines Ventilkörpers nach Fig. 1;
- Fig. 3: einen Längsschnitt gemäß der Linie C-C aus Fig. 1 mit einem eingesetzten Kernsegment;
- Fig. 4: einen Querschnitt gemäß der Linie B-B aus Fig. 1;
- Fig. 5: einen Längsschnitt gemäß der Linie A-A aus Fig. 2 mit zwei eingesetzten Kernsegmenten;
- Fig. 6: eine perspektivische Ansicht von oben eines Ausführungsbeispiels eines erfindungsgemäßen Ventilkörpers mit nach außen gezogenem Inliner; und
- Fig. 7: eine perspektivische Ansicht von unten des Ausführungsbeispiels des Ventilkörpers gemäß der Fig. 6.

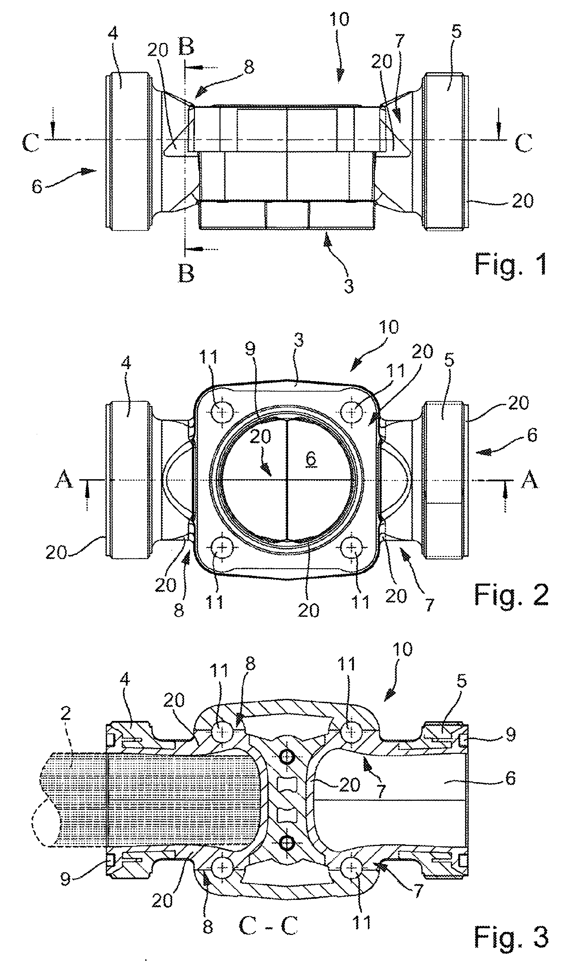

Die Fig. 1 und 2 zeigen jeweils eine Seitenansicht und eine Draufsicht eines Ausführungsbeispiels eines erfindungsgemäßen Ventilkörpers. Der Ventilkörper 10 weist eine längliche Form auf und bildet in seinem Inneren eine Durchgangsleitung 6 für ein hindurchströmendes Fluid wie eine Flüssigkeit oder ein Gas. Die Durchgangsleitung 6 des Ventilkörpers 10 erstreckt sich von einem ersten Flansch 4 zu einem zweiten Flansch 5, welche der Montage des Ventilkörpers in einem Rohrleitungssystem dienen und hierfür mit entsprechenden Montagelöchern für Verschraubungen beispielsweise versehen sind. Der Ventilkörper 10 ist senkrecht im Verhältnis zu der Durchströmrichtung der Durchgangsleitung 6 mit einer Einrichtung 3 zur Aufnahme eines Dosier- oder Absperrventils (in Fig. 1 nicht gezeigt) versehen. Der Ventilkörper 10 ist mit einem das Innere der Durchgangsleitung 6 auskleidenden Einsatz oder Inliner 20 ausgekleidet, der bei diesem Ausführungsbeispiel über die Flansche 4, 5 nach außen gezogen ist. Der Inliner 20 ist des Weiteren nach außen über die Einrichtung 3 zur Aufnahme des Ventils gezogen, so dass er die Anschlussfläche mit den vier Gewindelöchern 11 der Einrichtung 3 zur Aufnahme des Ventils überdeckt. Der Einsatz oder Inliner 20 dient einem Schutz des Strömungsweges durch den Ventilkörper 10, so dass beispielsweise auch aggressive Fluide oder chemisch kritische Fluide befördert werden können.

Gemäß der vorliegenden Erfindung ist der Inliner 20 des Ventilkörpers 10 an bestimmten Bereichen 7, 8 von Hinterschneidungen zumindest teilweise bis an die Außenseite des Ventilkörpers gezogen. Hierdurch weist der Inliner 20 in diesen Bereichen 7, 8 von Hinterschneidungen eine gewisse Eigensteifigkeit auf, so dass die Herstellung auch von komplexeren Hinterschneidungen ermöglicht wird und insbesondere eine strömungsgünstige Ausgestaltung des Inliners 20 realisiert werden kann.

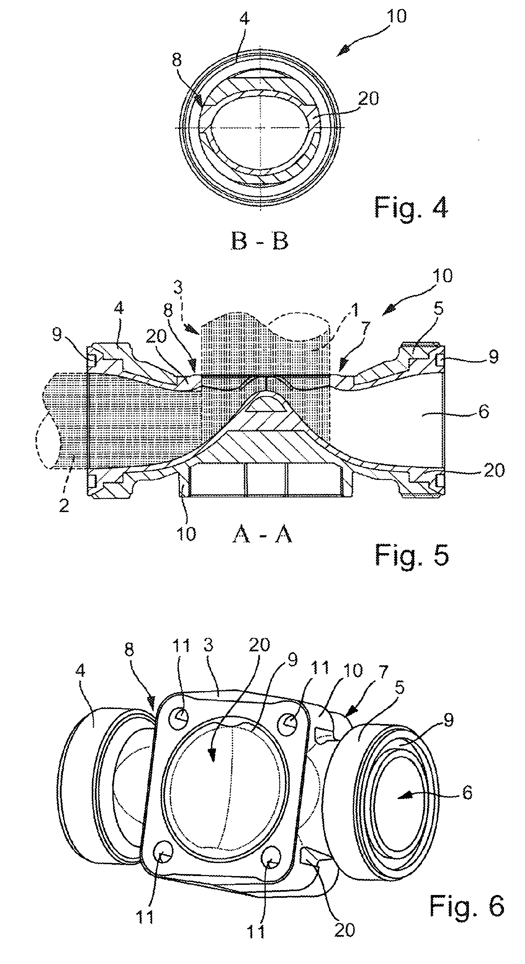

In den Fig. 3, 4 und 5 sind jeweilige Schnittansichten des Ausführungsbeispiels des erfindungsgemäßen Ventilkörpers mit eingesetztem Inliner 20 und teilweise eingesetzten Kernen 1, 2 zur Herstellung des Inliners 20 bzw. des Gehäuses des Ventilkörpers 10 gezeigt. Eine strömungsgünstige Gestaltung des Inliners 20 erfolgt bei diesem Ausführungsbeispiel durch einerseits das Vorsehen von abgerundeten Kanten am Übergang zwischen der Durchgangsleitung 6 und der Einrichtung 3 zum Anschluss des Dosier- oder Absperrventils (vgl. Schnittansicht der Fig. 5). Da der Inliner 20 an den Bereichen 7, 8 von Hinterschneidungen bzw. dem Übergang zwischen der Durchgangsleitung und der Aufnahmeeinrichtung 3 erfindungsgemäß mit einer größeren Wandstärke ausgebildet ist und/oder an diesen Stellen bis nach außen von dem Ventilkörper 10 gezogen ist (vgl. Schnittansicht der Fig. 5), ist es möglich, die Kanten der Übergangsbereiche 7, 8 in abgerundeter, strömungsoptimierter Form zu realisieren, und zwar dies auch bei Verwendung von relativ einfachen Kernsegmenten 1, 2, welche zum Herstellen des Ventilgehäuses, beispielsweise in einer Spritzgussmaschine, dienen. Wie es in der Längsschnittansicht der Fig. 3 zu erkennen ist, ist bei diesem Ausführungsbeispiel die Strömungsoptimierung des Inliners ferner durch eine partielle Querschnittserweiterung des inneren Strömungsweges der Durchgangsleitung 6 realisiert. An den Bereichen 7, 8 des Übergangs von der Durchgangsleitung 6 zu der Aufnahmeeinrichtung 3 ist das Innere des Inliners etwas erweitert, so dass der hier eigentlich verengte Strömungsweg wieder lokal vergrößert wird.

Auf diese Art und Weise können mit dem erfindungsgemäßen Ventilkörper ein höherer Durchsatz und gleichmäßigere Strömungsgeschwindigkeiten erreicht werden, als es bisher im Stand der Technik der Fall war. Ein derartiger Ventilkörper gemäß dem Stand der Technik hat beispielsweise bei einem Anschlussdurchmesser von 50 mm und einer Membrannenngröße von 40 mm üblicherweise einen Durchsatz von 25 m³/h als Durchflusskoeffizienten Kv. Der erfindungsgemäße Ventilkörper 10 mit einem im Inneren strömungsoptimierten Inliner 20 dagegen hat bei einem gleichen Anschlussdurchmesser hinsichtlich des Ventils und der Montageflansche 4, 5 einen demgegenüber deutlich verbesserten Durchflussfaktor Kv und erreicht einen Durchsatz von bis zu 48 m³/h. Mit dem erfindungsgemäßen Ventilkörper ist daher annähernd ein doppelter Durchsatz realisierbar gegenüber solchen Ventilkörpern nach dem Stand der Technik.

Die Herstellung des Ventilkörpers 10 mit seinem bereichsweise bis nach außen gezogenen Inliner 20 erfolgt nach diesem Ausführungsbeispiel der Erfindung wie folgt: Zunächst wird zum Herstellen des Inliners 20 ein Kern aus mindestens zwei oder mehreren Kernsegmenten 1, 2 in eine Spritzgussform eingelegt, welche der Innenform des strömungsoptimierten Inliners 20 entsprechen, d. h. mit abgerundeten Kanten in den Bereichen 7, 8 versehen sind und/oder Erweiterungen des Querschnitts im Inneren an diesen Bereichen aufweisen. Der Inliner 20 wird sodann in der Spritzgussform mit seinen Hinterschneidungen und verdickten Wandbereichen in den Bereichen 7, 8 hergestellt. Die Kernsegmente 1, 2 des Spritzkerns werden anschließend segmentweise wieder entnommen. Anschließend wird der so hergestellte und im Inneren strömungsoptimiert gestaltete Inliner 20 wieder mit anderen Kernen bestückt, welche jedoch die Bereiche der Hinterschneidungen nicht abstützen (vgl. schematisch eingezeichnete Kernsegmente 1, 2 in den Fig. 3 und 5). Der Inliner 20 wird mit diesen Kernsegmenten 1, 2 in die nächste Spritzgussform eingelegt, welche die Außenform des Ventilkörpers 10 festlegt. Das Gehäuse des Ventilkörpers 10 wird sodann durch Spritzgießen beispielsweise von Kunststoffmaterial und insbesondere unter hohem Druck um den Inliner 20 herum hergestellt. Bei dem in den Figuren dargestellten Ausführungsbeispiel wird dabei der Inliner 20 in den Bereichen 7, 8 des Übergangs zu der Aufnahmeeinrichtung 3 nicht umspritzt, so dass hier der Inliner 20 bis an die Außenseite gezogen ist und deutlich dickere Wandstärken aufweist als am Rest (vgl. Fig. 1 bis 7). Gemäß einem Vorteil des erfindungsgemäßen Verfahrens können beim Umspritzen des Inliners zur Herstellung des Gehäuses des Ventilkörpers 10 relativ einfache Kerne 1, 2 verwendet werden, da die Bereiche 7, 8 der Hinterschneidungen nicht unbedingt unterstützt werden müssen. Sie weisen hier durch die verdickten Wandstärken eine ausreichende Eigensteifigkeit auf. Die Hinterschneidungen des Inliners, welche insbesondere zur Herstellung von strömungsoptimierten, abgerundeten Kanten erfindungsgemäß verwendet werden, werden dennoch nicht durch das Spritzgießen des Gehäuses des Ventilkörpers 10 zugeschoben. Im Endeffekt ist der Inliner 20 an diesen Bereichen zumindest abschnittsweise bis nach außen gezogen und von außen sichtbar (vgl. Fig. 1, 2, 6 und 7). Das Material des Inliners 20 kann zum Beispiel ein unverstärktes Polypropylen oder ein PFA, PTFE oder ähnliches sein. Für die Herstellung des äußeren Gehäuses des Ventilkörpers 10 wird nach diesem Ausführungsbeispiel vorzugsweise ebenfalls ein Polypropylen verwendet, welches jedoch mit Verstärkungen ausgestattet ist. Beispielsweise kann ein glasfaserverstärktes oder glaskugelverstärktes Polypropylen verwendet werden, welches gegenüber dem Material des Inliners eine höhere Steifigkeit aufweist.

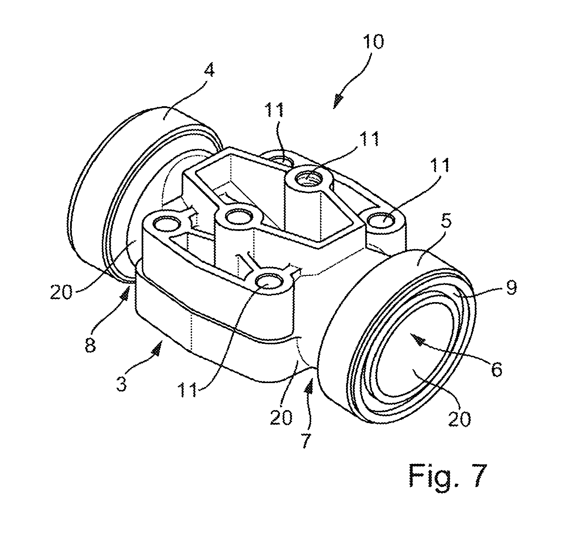

In den Fig. 6 und 7 sind perspektivische Ansichten eines Ausführungsbeispiels eines so hergestellten Ventilkörpers 10 mit einem teilweise bis nach außen gezogenen Inliner 20 dargestellt. Bei dem hier beschriebenen Ausführungsbeispiel ist der Inliner 20 an den Montageflanschen 4, 5 ebenfalls bis nach außen gezogen. Gleiches gilt für den Montagebereich der Einrichtung 3 für die Montage und Aufnahme des eigentlichen Ventils mit den dort vorgesehenen Gewindelöchern 11. Durch die verdickten Wandstärken in den Bereichen 7, 8 und durch die Hinterschneidungen des Inliners 20 wird nach einem weiteren Merkmal der Erfindung auch ein sicherer Halt des Inliners 20 im Inneren des Ventilkörpers 10 gewährleistet. Ein Verrutschen oder Verziehen während des Betriebs wird auch bei abrasiven Materialien oder aggressiven Flüssigkeiten effektiv hierdurch vermieden. Das erfindungsgemäße Verfahren hat ferner den Vorteil, dass trotz der so hergestellten strömungsoptimierten Hinterschneidungen im Inneren der Durchgangsleitung 6 keine aufwendigen Spritzgussformen, beispielsweise mit Einfallkernen oder ähnlichem, erforderlich sind. Mit relativ einfachen Mitteln wird ein strömungstechnisch deutlich optimierter Ventilkörper bereitgestellt, der gleichermaßen eine sichere Fixierung des Inliners 20 erlaubt und somit in seiner Funktionalität wie auch im Gebrauch deutlich gegenüber dem Stand der Technik verbessert ist.

## Patentansprüche

1. Verfahren zur Herstellung eines Ventilkörpers (10) für durchströmende Fluide mit einer Durchgangsleitung (6) zwischen einem ersten Flansch (4) und einem zweiten Flansch (5) und mit einer Einrichtung (3) zur Aufnahme eines Absperr- oder Dosierventils, wobei im Ventilkörper (10) ein das Fluid führender Inliner (20) vorgesehen wird, welcher das Innere des Ventilkörpers (10) auskleidet,
mit den Schritten:
a. Zusammensetzen eines Kerns zum Spritzgießen des Inliners (20) in einer Form aus mindestens zwei Kernsegmenten (1, 2);
b. Herstellen des Inliners (20) mit Hinterschneidungen (7, 8) und einer im Innern strömungsoptimierten Form durch Umspritzen des Kerns;
c. Segmentweises Entnehmen des Kerns aus dem so hergestellten Inliner (20); **gekennzeichnet durch** die Schritte:
d. Einsetzen eines Kerns in den Inliner (20), welcher die Bereiche von Hinterschneidungen (7, 8) nicht abstützt; und
e. Umspritzen des Inliners (20) mit dem Ventilkörper (10) unter mindestens teilweiser Auslassung von den Bereichen der Hinterschneidungen (7, 8), derart, dass der Inliner (20) an den Bereichen (7, 8) von Hinterschneidungen am Übergang zwischen der Durchgangsleitung (6) und der Aufnahmeeinrichtung (3) mindestens teilweise bis an eine Außenseite von dem Ventilkörper (10) gezogen ist und/oder dort eine größere Wandstärke aufweist.

2. Verfahren nach Anspruch 1, **dadurch gekennzeichnet, dass** eine strömungsoptimierte Innenform des Inliners (20) durch abgerundete Kanten hergestellt wird.

3. Verfahren nach einem der Ansprüche 1 oder 2, **dadurch gekennzeichnet, dass** eine strömungsoptimierte Innenform des Inliners (20) durch bereichsweise Aufweitungen des Strömungsquerschnitts an den Übergängen zwischen der Durchgangsleitung (6) und der Aufnahmeeinrichtung (3) hergestellt wird.

4. Verfahren nach einem der Ansprüche 1 bis 3, **dadurch gekennzeichnet, dass** das Umspritzen des Inliners (20) mit dem Ventilkörper (10) in Schritt d) unter hohem Druck, insbesondere einem Druck von mehreren hundert bar, erfolgt.

## Claims

1. Method for manufacturing a valve body (10) for throughflowing fluids with a through-line (6) running between a first flange (4) and a second flange (5) and with a fixture (3) for receiving a shut-off or dosing valve, wherein an inliner (20) guiding the fluid is provided in the valve body (10), said inliner lining the interior of the valve body (10), said method comprising the steps:
a. Assembly of a core for the injection moulding of the inliner (20) in a mould consisting of at least two core segments (1, 2);
b. Manufacture of the inliner (20) with undercuts (7, 8) and a form which is flow-optimised on the inside by injection moulding around the core;
c. Removal of the core, segment by segment, from the inliner manufactured in this way (20); **characterized by** the steps of:
d. Fitting of a core in the inliner (20) which does not support the regions of undercuts (7, 8); and
e. Overmoulding of the inliner (20) with the valve body (10), at least partially omitting the regions of the undercuts (7, 8), such that, in the regions (7, 8) of undercuts at the transition between the through-line (6) and the receiving fixture (3), the inliner (20) is at least partially drawn as far as the outer side of the valve body (10) and/or has a greater wall thickness there.

2. Method according to claim 1, **characterised in that** a flow-optimised inner form of the inliner (20) is created through rounded edges.

3. Method according to one of the claims 1 or 2, **characterised in that** a flow-optimised inner form of the inliner (20) is created through widening of the flow cross-section in certain regions at the transitions between the through-line (6) and the receiving fixture (3).

4. Method according to one of the claims 1 to 3, **characterised in that** the overmoulding of the inliner (20) with the valve body (10) in step d) is carried out under high pressure, in particular a pressure of several hundred bar.

## Revendications

1. Procédé de fabrication d'un corps de vanne (10) pour des fluides en circulation au travers de celui-ci comprenant une conduite de passage (6) entre une première flasque (4) et une deuxième flasque (5) et comprenant un dispositif (3) destiné à recevoir une vanne de fermeture ou de dosage, étant entendu qu'il est prévu dans le corps de la vanne (10) un tubage (20) conduisant le fluide, lequel revêt l'intérieur du corps de la vanne (10), comprenant les étapes suivantes:
a. assemblage d'une matrice pour le moulage par injection du tubage (20) composée d'au moins deux segments de matrice (1, 2);
b. fabrication du tubage (20) avec des contre-dépouilles (7, 8) et une forme optimisée pour la circulation à l'intérieur en couvrant la matrice par injection;
c. enlèvement par segment de la matrice en dehors du tubage (20) ainsi fabriqué;
**caractérisé par** les étapes suivantes:
d. insertion d'une matrice dans le tubage (20), qui n'est pas en appui sur les zones des contre-dépouilles (7, 8); et
e. couverture par injection du tubage (20) au moyen du corps de la vanne (10) en laissant non couvertes, au moins partiellement, les zones des contre-dépouilles (7, 8) de telle sorte que le tubage (20) est étiré au moins partiellement jusqu'à un côté extérieur du corps de la vanne (10) au niveau des zones (7, 8) des contre-dépouilles à la transition entre la conduite de passage (6) et le dispositif de réception (3) et/ou qu'il présente à cet endroit une épaisseur de paroi supérieure.

2. Procédé selon la revendication 1, **caractérisé en ce qu'**une forme intérieure du tubage (20) optimisée pour la circulation est réalisée au moyen d'arêtes arrondies.

3. Procédé selon l'une des revendications 1 ou 2, **caractérisé en ce qu'**une forme intérieure du tubage (20) optimisée pour la circulation est réalisée au moyen d'élargissements par zones de la section de circulation au niveau des transitions entre la conduite de passage (6) et le dispositif de réception (3).

4. Procédé selon l'une des revendications 1 à 3, **caractérisé en ce que** la couverture par injection du tubage (20) au moyen du corps de la vanne (10) est exécutée à l'étape d) sous haute pression, en particulier sous une pression de plusieurs centaines de bars.
